**Europäisches Patentamt**

**European Patent Office**

**Office européen des brevets**

(11) Veröffentlichungsnummer: **0 379 643**

**A1**

## EUROPÄISCHE PATENTANMELDUNG

(21) Anmeldenummer: 89117596.0

(22) Anmeldetag: 22.09.89

(51) Int. Cl.5: **F16L 9/22**

(30) Priorität: 23.12.88 DE 3843717

(43) Veröffentlichungstag der Anmeldung:
01.08.90 Patentblatt 90/31

(84) Benannte Vertragsstaaten:
**AT BE CH DE ES FR GB GR IT LI LU NL SE**

(71) Anmelder: **Schmalhofer, Markus**
**Robert-Bosch-Strasse 15**
**D-8350 Plattling(DE)**

(72) Erfinder: **Schmalhofer, Markus**
**Robert-Bosch-Strasse 15**
**D-8350 Plattling(DE)**

(74) Vertreter: **Kuhnen, Wacker & Partner**
**Schneggstrasse 3-5 Postfach 1553**
**D-8050 Freising(DE)**

(54) **Leitungselement für einen Rundkanal zur Leitung von gasförmigen Medien.**

(57) Ein Leitungselement für Rundkanäle wird aus in Zylinderform gebogenem Flachmaterial, insbesondere aus mehreren Segmenten (2), geschaffen. Zur gasdichten mechanischen Verbindung an achsparallelen Verbindungsnähten wird das Material der Kanalwand vorzugsweise zweifach abgekantet und bildet so einen mechanisch sehr stabilen Randstreifen (6) mit einem zurückgebogenen Stabilisierungsstreifen, an dem eine mechanische Verbindung der Segmente (2) erfolgen kann. Zur weiteren Erhöhung der Stabilität des Leitungselements kann die Grundfläche des Zylinders als Polygon mit als achsparalle Kanten verlaufenden Polgonecken (20) ausgebildet werden. Zur Bildung der Stirnflansche wird entweder das Material der Kanalwand gleichfalls zweifach abgewinkelt, so daß jeweils ein entsprechender endseitiger Randstreifen mit zurückgebogenem Stabilisierungsstreifen vorliegt, oder es werden, vorzugsweise unter Zwischenschaltung eines Dichtungsmaterials, separate Winkelschienen mit dem Material der Kanalwand mechanisch verbunden. Auf diese Weise wird ein Leitungselement zur Verfügung gestellt, das, ausgehend von einem ebenen Flachmaterialzuschnitt, schweißnahtfrei herstellbar, insbesondere aus mehreren Segmenten (2) zusammensetzbar ist und bei hoher mechanischer Stabilität sehr gute Dichtigkeit aufweist.

FIG. 2

## Leitungselement für einen Rundkanal zur Leitung von gasförmigen Medien

Die Erfindung betrifft ein Leitungselement für einen Rundkanal zur Leitung von gasförmigen Medien, nach dem Oberbegriff des Anspruchs 1.

Ein derartiges Leitungselement ist in der Praxis seit langem bekannt und wird üblicherweise aus in Form eines aufgerollten wickels vorliegendem Blechmaterial, sogenanntem Coilblech, hergestellt. Dabei wird das Coilblech in Querrichtung verarbeitet, so daß die Breite des Coilblechs die Länge des Leitungselements bestimmt. Im allgemeinen haben die in der Praxis verfügbaren Coilbleche eine maximale Breite von 1,50 m, so daß dementsprechend die Länge eines Leitungelements auf dieses Maß begrenzt ist.

Der Zuschnitt eines Coilblechs, dessen Länge dem Umfang des herzustellenden Leitungselements entspricht, wird in die Form eines Zylinders gebogen. Anschließend werden die achsparallelen aneinanderstoßenden Verbindungskanten üblicherweise durch Schweißen miteinander verbunden. Diese Schweißnaht ist nicht in der Lagen, dem Leitungselement ausreichende Formstabilität zu verleihen; dies wird durch die an den beiden Enden des Leitungselements angeordneten Stirnflansche aus gebogenen, angeschweißten Winkeleisen erzielt. Sofern die Länge des Leitungselements auf die Breite des verarbeiteten Coilblechs begrenzt bleibt und nicht durch Aneinanderfügen mehrer Leitungselemente ohne Zwischenschaltung von Stirnflanschen - also durch über den Umfang verlaufende Schweißnähte - erhöht wird, reicht die so erzielte Formstabi lität in der Regel aus. Es hat sich gezeigt, daß die Formstabilität von auf diese Weise aufgebauten Leitungen bzw. von Leitungselementen mit zu groß gewählter Länge derart herabgesetzt wird, daß sie den in der Praxis auftretenden Anforderungen nicht mehr genügen.

Es liegt auf der Hand, daß es aufwendig ist, einen Rundkanal aus einer verhältnismäßig großen Anzahl von Leitungselementen geringer Länge aufzubauen, die jeweils an beiden Enden mit Stirnflanschen bestückt sein müssen, damit eine hinreichende Stabilität des Rundkanals erreicht wird.

Neben der als nachteilig empfundenen Begrenzung des gattungsgemäßen Leitungselements auf verhältnismäßig geringe Längen im Bereich von 1,50 m und dem unerwünscht hohen baulichen Aufwand zur Herstellung eines Rundkanals durch Zusammenfügen der kurzen Leitungselemente wird das Anbringen von Schweißnähten zum umfangseitigen Schließen der Kanalwand des Leitungselements und zum Befestigen der Stirnflansche als gravierender Mangel angesehen. Insbesondere die achsparallele Längsnaht ist, da es sich bei ihr um eine Stumpfschweißnaht handelt, agressiven Medien ausgesetzt, die sich innerhalb und/oder außerhalb des Leitungselements befinden können, und daher in hohem Maße korrosionsgefährdet. Durch die Wärmeeinwirkung beim Schweißen wird die gewöhnlich feuerverzinkte Oberfläche des Coilblechs verletzt. Aus Praktikabilitätsgründen kommt eine nachträgliche Feuerverzinkung des Leitungselements im geschweißten Zustand, zumal im Hinblick auf dessen meist erhebliche Baugröße, nicht in Betracht.

Wie sich in der Praxis immer wieder zeigt, ist die Lebensdauer der Leitungselemente in erheblichem Maße durch Korrosion an den Schweißnähten herabgesetzt, nicht nur weil aus solchen Leitungselementen aufgebaute Rundkanäle in den meisten Fällen der Leitung agressiver Innenmedien dienen, sondern auch weil sie häufig zusätzlich dem Einfluß agressiver Außenmedien ausgesetzt sind.

Der vorliegenden Erfindung liegt daher die Aufgabe zugrunde, die Standzeit des im Oberbegriff des Patentanspruchs 1 angegebenen Leitungselements gegenüber dem Angriff von korrosiven gasförmigen Medien zu erhöhen und damit zugleich die Wirtschaftlichkeit des Einsatzes solcher Leitungselemente zu verbessern. Gleichzeitig ist weiterhin angestrebt, die Formstabilität des Leitungselements zu erhöhen und auf diese Weise eine größere Baulänge zu ermöglichen, so daß sich wegen der dann geringeren Anzahl von erforderlichen Stirnflanschen zum Aufbau eines Rundkanalabschnitts ein Kostenvorteil ergibt.

Die Lösung der Aufgabe erfolgt durch die kennzeichnenden Merkmale des Patentanspruchs 1.

Dadurch, daß die Verbindungsnaht durch etwa im rechten Winkel aus der Ebene der Kanalwand abgebogene, mechanisch miteinander verbundene Randstreifen gebildet ist, wird die Möglichkeit geschaffen, die Verbindung der Randstreifen schweißnahtfrei durch Verschrauben, Vernieten oder dergleichen herzustellen. Dadurch entfällt die Notwendigkeit, das umfangsseitige Schließen der Kanalwand durch eine Stumpfschweißnaht herbeizuführen. Aufgrund der Entbehrlichkeit des Stumpfschweißens sind in einfacher Weise alle durch die beim Schweißen auftretenden Wärmeentwicklung verbundenen unerwünschten Einflüsse auf die Beschaffenheit des Materials im Bereich der Schweißnaht vermieden. Da in Form der Randstreifen zwei ebene, in sich formstabile Flächen zur praktisch vollständigen Anlage aneinander gelangen, ist gleichzeitig, gegebenenfalls unterstützt durch einen zwischen die Randstreifen eingelegten Dichtstreifen, für eine besonders hohe Dichtigkeit gegen den Austritt des durch das Leitungselement hindurchgeleiteten gasförmigen Mediums erreicht. Da es zum gasdichten Verschließen der Kanalwand nicht des Anbringens einer Schweißnaht bedarf, kann die bei dem gattungsgemäßen Leitungselement als höchst unerwünschte Verletzung der Oberfläche der Kanalwand hervorgerufene Anfälligkeit für den Angriff aggressiver Medien vollständig vermieden werden, so daß sich eine erheblich erhöhte Standzeit ergibt.

Die Abwinkelung der achsparallel verlaufenden Randstreifen aus der Ebene der Kanalwand kann nach innen, also in den von dem Leitungselement umschlossenen Raum hinein erfolgen, oder aber nach außen. Da das Maß der Abwinkelung zumindest annähernd in einem rechten Winkel erfolgte ergibt sich eine beträchtliche Erhöhung der Formstabilität des Leitungselements insbesondere gegen Durchbiegen aufgrund des Eigengewichts. Dieser Umstand ermöglicht es, die Baulänge des Leitungselements wesentlich zu erhöhen und dazu überzugehen, das Coilblech nicht in Querrichtung sondern in Längsrichtung zu verarbeiten, so daß die Begrenzung der Länge des Leitungselements durch die Breite des Coilblechs entfällt.

Aus der DE-OS 37 04 633 ist zwar bereits ein Leitungselement bekannt, das umfangsseitig durch die mechanische Verbindung achsparalleler Randstreifen gasdicht verschlossen wird. Bei dem dort beschriebenen Leitungselement handelt es sich allerdings um ein Leitungselement für einen Flachkanal rechteckigen oder quadratischen Querschnitts. Bei einem solchen Querschnitt treten nur Ecken und ebene Wände zwischen den Ecken auf; wesentliches Prinzip dieses bekannten Leitungselements ist, Verbindungen an den einstückig auszubildenden Ecken zu vermeiden, und diese Verbindungen in den Bereich der ebenen Wände zu verlegen. Solche ebenen Wände treten bei Rundrohren ebensowenig auf wie Eckbereiche, so daß die dortigen Verhältnisse nicht mit denjenigen bei Rundrohren vergleichbar sind.

Vorteilhafte Weiterbildungen der Erfindung ergeben sich aus den Unteransprüchen.

Da es aufgrund der auf die achsparallel verlaufenden Randstreifen zurückzuführende Erhöhung der Formstabilität des Leitungselements möglich ist, zu größeren Baulängen überzugehen und das Coilblech in Längsrichtung zu verarbeiten, ist zwar unter diesem Gesichtspunkt nicht die Länge des Leitungselements begrenzt, wohl aber aufgrund der Breite des Coilblechs der Umfang bzw. der Durchmesser des Leitungselements, sofern das Leitungselement durch lediglich ein Paar mechanisch miteinander verbundener achsparalleler Randstreifen umfangsseitig gasdicht geschlossen werden soll. Zur Herstellung von Leitungselementen größerer Durchmesser ist daher vorgesehen, das Leitungselement aus mehreren, jeweils lediglich einen Teil des Umfangs überdeckenden Segmenten zusammenzusetzen. Dabei wird je nach Anzahl der erforderlichen Segmente eine entsprechende Anzahl achsparallel verlaufender Randstreifen miteinander mechanisch verbunden, so daß die bereits erwähnte Erhöhung der Formstabilität des Leitungselements weiter verstärkt wird. Das in dieser Weise gemäß Anspruch 2 aus mehreren Segmenten zusammengesetzte Leitungselement zeichnet sich demnach vorteilhaft durch eine besonders hohe Formstabilität aus und kann auch aus diesem Grunde auch mit sehr großen Durchmessern hergestellt werden. Auch bei Rohren großen Durchmessers können die Segmente bei Bedarf unmontiert transportiert und an Ort und Stelle gebracht werden, wo sie dann etwa durch Verschraubung zum Leitungselement zusammengesetzt werden. Bei Bedarf kann eine entsprechende Verbindung von Stirnflansch-Segmenten durch umfangsseitige Verschraubung ihrer Enden an radial liegenden Haltelaschen erfolgen, wenn nicht ein gegebenenfalls einteiliger Stirnflansch auch erst an Ort und Stelle mit der Kanalwand verbunden wird.

Zur weiteren Erhöhung der für den übergang zu größeren Baulängen und auch Durchmessern des Leitungselements unerläßlichen Formstabilität ist gemäß Anspruch 3 vorteilhaft vorgesehen, daß die Grundfläche des die Kanalwand bildenden Zylinders ein Polygon ist. Die durch ein Polygon verwirklichte Annäherung an beispielsweise eine kreisförmig oder oval zylindrische Ausgestaltung der Kanalwand des Leitungselements zeichnet sich dadurch aus, daß die Polygonecken durch achsparallel verlaufende Kanten gebildet sind. Diese Kanten erhöhen, da sie insbesondere einer Durchbiegung des Leitungselements Widerstand zu leisten vermögen, die Formstabilität des Leitungselements, indem sie die Wirkung der annähernd rechtwinkelig aus der Ebene der Kanalwand ausgebogenen achsparallelen Randstreifen verstärken. Gleichzeitig wird durch die Annäherung der beispielsweise kreiszylindrischen Form des Leitungselements durch ein Polygon den herstellungstechnischen Möglichkeiten Rechnung getragen, da bei großen Durchmessern des Leitungselements ein unter Vermeidung jeglicher Kantenbildung erfolgendes Formen der Kanalwand mit Schwierigkeiten behaftet ist.

Als vorteilhaft hat sich in der Praxis erwiesen, gemäß Anspruch 4 den Abstand zwischen benachbarten Polygonecken im Bereich von 20 bis 200 mm zu wählen, wobei innerhalb dieses Bereichs ein Bereich von 50 bis 150 mm bevorzugt wird und sich ein Maß von 100 mm als besonders günstige Größe erwiesen hat.

Die an den Enden des Leitungselements angeordneten Stirnflansche, die dem gasdichten Anschluß benachbarter Leitungselemente dienen, werden gemäß Anspruch 5 vorteilhaft durch abgewinkelte Randstreifen des die Kanalwand bildenden Coilblechs gebildet. Hierdurch ergibt sich der Vorteil, daß es aufgrund dieser einstückigen Ausbildung keinerlei Verbindung von Stirnflansch und Kanalwand bedarf, die in jedem Fall einen erhöhten bautechnischen Aufwand bedeutet, sowie bestmögliche Stabilität erzielt wird. Insbesondere wird auf diese Weise vermieden, die Verbindung durch eine Schweißnaht herzustellen und dabei in Kauf nehmen zu müssen, daß die der Oberflächenbeschaffenheit abträglichen Wirkungen des Schweißens auftreten und die Korrosionsbeständigkeit der Verbindung erheblich herabsetzen.

Werden gemäß Anspruch 6 die Stirnflansche zur gleichen Seite der Kanalwand abgewinkelt wie die achsparallelen Randstreifen, so führt dies vorteilhaft dazu, daß auf der anderen Seite der Kanalwand keinerlei Ecken oder Kanten vorhanden sind, diese also glatt ist. Bei im Freien Verlegten, Windkräften ausgesetzten Leitungen hat sich eine Abwinkelung nach außen als besonders vorteilhaft erwiesen, da hierdurch nicht nur eine strömungsgünstig glatte Innenwand des Kanals entsteht-, sondern darüber hinaus vorteilhafte Umströmungsbedingungen erzeugt werden: Durch lokale Strömungsabrisse an vorstehenden Kanten wird die volle Ausbildung der Wirbelstraßen hinter der Leitung gestört und werden somit dynamische Schingungsvorgänge unterdrückt, die andernfalls insbesondere bei Resonanz zu energiereichen Schwingungen des Kanals und damit zu Beschädigungen führen können.

Werden gemäß Anspruch 7 die Stirnflansche durch separate

Winkelschienen gebildet, so ergibt sich der Vorteil, daß zur Herstellung der Stirnflansche im Handel gängige und somit kostengünstige Profilschienen wie Winkeleisen Verwendung finden können, die gleichzeitig eine besonders hohe Stabilität aufweisen, wenn sie, etwa durch den Einsatz einer herkömmlichen Biegemaschine, in eine zylindrische Form gebracht worden sind.

Hinsichtlich der Anordnung der jeweils einen Stirnflansch bildenden Winkelschiene ist es möglich, den Befestigungsschenkel der Winkel gemäß Anspruch 8 auf der Außenseite oder aber gemäß Anspruch 9 an der Innenseite der Kanalwand anzuordnen. Damit kann, etwa bei beengten Einbauverhältnissen, der durch den Außenrand des von der Kanalwand praktisch im rechten Winkel abstehenden Schenkels der Winkelschiene sich ergebende Durchmesser beeinflußt werden. Weiter ist bei einer Anordnung des Befestigungsschenkels der Winkelschiene an der den Randleisten der Verbindungsnaht abgewandten Seite der Kanalwand ein Ausklinken der achsparallelen Randstreifen im Bereich des Befestigungsschenkels entbehrlich.

Wenn an der Außen- oder Innenseite des Rundkanals kein Auftreten eines korrosiven Mediums zu erwarten steht, so kann der Befestigungsschenkel des Stirnflansches bei Bedarf dort durch Schweißen mit der Kanalwand verbunden werden.

Die gemäß Anspruch 10 vorgesehene mechanische Verbindung der Winkelschiene mit der Kanalwand erfolgt vorteilhaft durch Verschrauben; eine Schweißnaht wird hierdurch auch bei dieser Verbindung vermieden.

Für den Fall, daß gemäß Anspruch 11 die mechanischen Verbindung punktförmig, etwa durch Verschrauben der den Stirnflansch bildenden Winkelschiene mit der Kanalwand erfolgt, ist diese Verbindung vorteilhaft im mittleren Bereich zwischen benachbarten Polygonecken vorzunehmen, sofern die zylindrische Form des Leitungselements durch ein Polygon gebildet ist. Beim Schließen der Verbindung, also etwa beim Anziehen der Schrauben, wird dabei infolge der hohen Formstabilität des Winkleisens der zwischen benachbarten Polygonecken liegende ebenflächige Bereich durch Heranziehen an die Innenfläche des Winkeleisens gerundet. Zur sicheren Erzielung von Gasdichtigkeit ist dabei vorgesehen, zwischen dem achsparallelen Befestigungsschenkel der Winkelschiene und der Außen-bzw. Innenfläche der Kanalwand einen Dichtungsstreifen vorzusehen, der im Zuge des Anziehens der Schraubverbindung zusammengedrückt wird und somit zuverlässig seine Dichtfähigkeit erreicht.

Schließen sich gemäß Anspruch 12 an die Außenkanten der achsparallelen und/oder stirnseitigen Randstreifen wenigstens annähernd im rechten Winkel abgebogene Stabilisierungsstreifen an, so ergibt sich eine sehr erhebliche Erhöhung der Stabilität gegen Ausbiegen, wie dies in der DE-OS 37 04 633 näher erläutert ist, auf die wegen weiterer Einzelheiten insoweit und in Bezug auf weitere auch bei einem Rundkanal anwendbare Einzelheiten ausdrücklich Bezug genommen wird.

Weitere Einzelheiten, Merkmale und Vorteile der vorliegenden Erfindung ergeben sich aus der nachfolgenden Beschreibung unter Bezugnahme auf die Zeichnung.

Es zeigt:

Fig. 1 eine perspektivische Darstellung eines Segmentes aus gebogenem Flachmaterial zum Aufbau eines erfindungsgemäßen Leitungselements für einen Rundkanal,

Fig. 2 ein aus zwei abgewandelten Segmenten zusammengesetztes Leitungselement,

Fig. 3 eine Schnittdarstellung einer weiteren Ausführungsform der Erfindung,

Fig. 4 und 5 Längsschnitte durch zwei Abwandlungen des Leitungselements in dessen Stirnbereich, und

Fig. 6 eine teilweise Schnittdarstellung entlang der Linie VI-VI in Fig. 5.

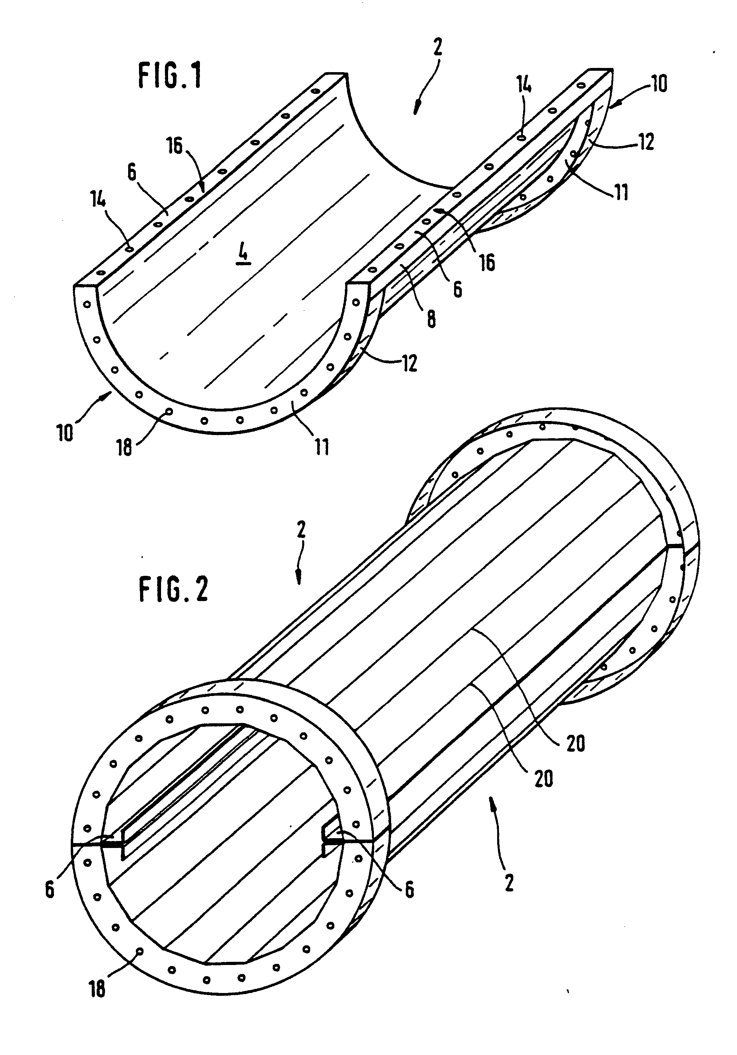

Wie Fig. 1 veranschaulicht, weist ein zum Aufbau des erfindungsgemäßen Rundkanals verwendetes Segment 2 eine in Form eines Kreiszylinders gebogene Kanalwand 4 auf, die sich von ihren beiden achsparallelen Rändern jeweils in einem Randstreifen 6 fortsetzt, der annähernd im rechten Winkel aus der Ebene der Kanalwand 4 nach außen abgebogen ist. An die Randstreifen 6 schließt sich jeweils ein nochmals annähernd im rechten Winkel in die Tangenten-Ebene der Kanalwand 4 zurückgebogener Stabilisierungsstreifen 8 an, so daß das Segment 2 insbesondere im Bereich der zum umfangsseitigen Schließen der Kanalwand 4 durch Ansetzen eines weiteren Segments 2 dienenden Randstreifen 6 große Biegesteifigkeit aufweist, die auch einen zuverlässigen gasdichten Abschluß gewährleistet.

An ihren beiden axialen Enden ist die Kanalwand 4 des Segments 2 jeweils zur Bildung eines Stirnflansches 10 im rechten Winkel aus der Kanalwand 4 nach außen abgebogen. An den Stirnflansch 10 schließt sich jeweils ein in die Ebene der Kanalwand 4 zurückgebogener Stabilisierungsstreifen 12 an. Auf diese Weise wird auch im Bereich der Stirnflansche 10 eine besonders hohe Steifigkeit des Segments 2 erreicht und sichergestellt, daß beim Anschließen weiterer Leitungselemente eine ebene Anlage der Stirnflansche 10 aneinander erreicht wird. Zum Aufbau eines erfindungsgemäßen Leitungselements werden zwei Segmente 2 an ihren Randstreifen 6 beispielsweise durch Schrauben (nicht näher dargestellt), die durch die hierfür vorgesehenen Schraublöcher 14 geführt und sodann angezogen werden, miteinander verbunden und bilden eine gasdichte achsparallele Verbindungsnaht 16 zwischen den Segmenten 2. Zum Aufbau eines Rundkanals aus zusammengesetzten Leitungselementen werden die Leitungselemente über ihre Stirnflansche 10 in gleicher Weise vorzugsweise durch Verschrauben miteinander verbunden, wobei für die Schrauben (nicht näher dargestellt) die entsprechenden Schraublöcher 18 vorgesehen sind. Sowohl für das Zusammensetzen eines Leitungselements aus mehreren Segmenten 2 wie auch für den Aufbau des Rundkanals aus mehreren Leitungselementen ist es demnach nicht erforderlich, irgendeine Schweißnahtverbindung herzustellen.

Das in Fig. 2 dargestellte Leitungselement ist aus zwei Segmenten 2 zusammengesetzt, die gegenüber dem in Fig. 1 dargestellten Segment 2 insofern abgewandelt sind, als zum einen die achsparallelen Randstreifen 6 aus der Ebene der Kanalwand nach innen, d.h. in den von dem Leitungselement umschlossenen Raum hinein, abgewinkelt sind, so daß an der äußeren Umfangsfläche des Leitungselements insoweit keine Kanten vorhanden sind. Zum anderen sind die Segmente 2 dahin abgewandelt, daß die Kanalwand 4 als eine sich der Form eines Kreiszylinders annähernde Polygonfläche ausgebildet ist, deren achsparallel verlaufende Kanten 20 die Formstabilität des Segments und somit des zusammengesetzten Leitungselements insbesondere gegen Durchbiegung erheblich erhöhen und folglich größere Baulängen zulassen. Bei dem in Fig. 2 dargestellten Leitungselement sind die beiden endseitigen Stirnflansche in gleicher Weise einstückig aus dem Material der Kanalwand 4 ausgebildet wie bei dem in Fig. 1 dargestellten Segment 2, wobei die Kanalwand 4 in der Nachbarschaft Stirnflansche 10 in die Kreiszylinderform übergeht. Der in Fig. 2 veranschaulichte Aufbau eines Leitungselements aus Segmenten 2 mit nach innen abgebogenen achsparallelen Randstreifen 6 wird vorzugsweise in solchen Fällen gewählt, in denen einer umfangsseitig glatten Außenfläche der Vorzug gegeben wird.

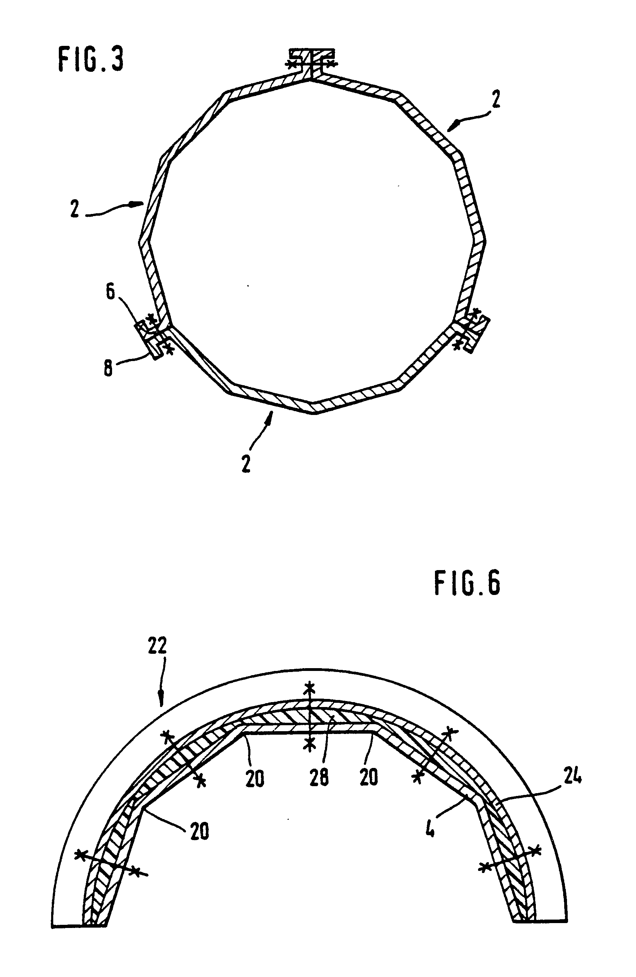

Die in Fig. 3 gezeigte Schnittansicht einer weiteren abgewandelten Ausführungsform des Leitungselements veranschaulicht - unter Weglassung der Darstellung des Stirnflansches - schematisch den Aufbau des Leitungselemts aus drei Segmenten 2, die jeweils als Polygon ausgebildet sind. Auch hier erfolgt die mechanische Verbindung durch Verschrauben der aneinanderliegenden achsparallelen Randstreifen 6, an die sich die zurückgebogenen Stabilisierungsstreifen 8 anschließen. Durch Aufbau des Leitungselements aus einer Mehrzahl von Segmenten 2 lassen sich ohne Transportprobleme auch große Durchmesser verwirklichen.

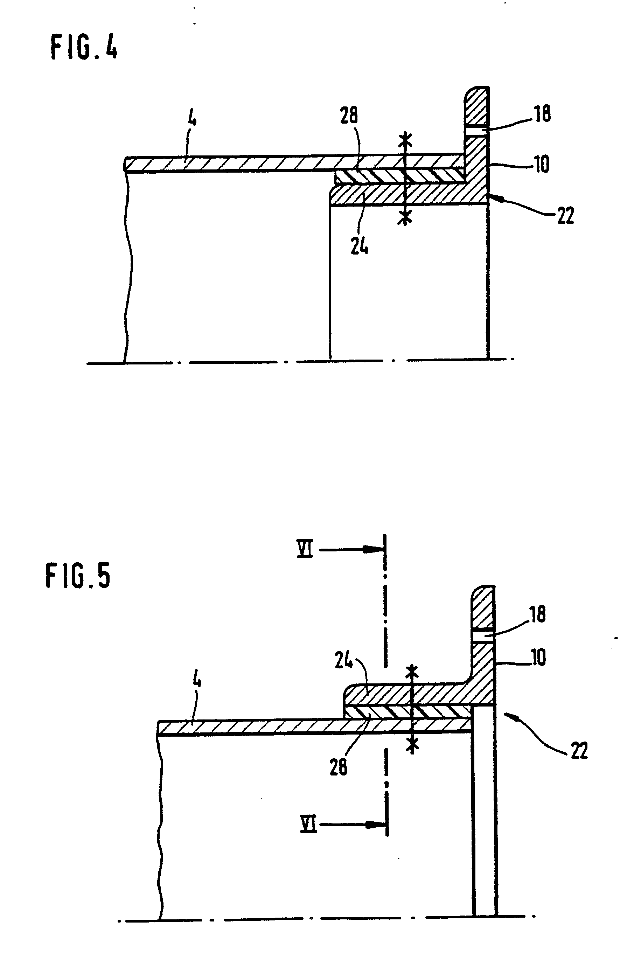

Wie die Figuren 4 und 5 zeigen, ist gemäß der dortigen Abwandlung des Leitungselements der Stirnflansch 10 jeweils durch eine Winkelschiene 22 gebildet, die zu einer der Form der Kanalwand 4 entsprechenden zylindrischen Form gebogen ist und mit ihrem achsparallelen Befestigungsschenkel 24 vorzugsweise durch eine Schraubverbindung mit der Kanalwand 4 verbunden ist. Der im rechten Winkel zu dem Befestigungsschenkel 24 verlaufende Flanschschenkel 26 bildet den Stirnflansch 10 zur Verbindung des Leitungselements mit dem Stirnflansch 10 eines anschließenden Leitungselements. Zur Verbindung der Stirnflansche sind wiederum Schraublöcher 18 vorgesehen. Zwischen dem achsparallelen Befestigungsschenkel 24 und der Kanalwand 4 ist zur Erzielung von Gasdichtigkeit der Verbindung ein Dichtungsmaterial 28 vorgesehen, das nach dem Anziehen der Schraubverbindung einen sicheren Schutz gegen den Austritt des gasförmigen Mediums bietet. Bei der in Fig. 4 gezeigten Abwandlung des Leitungselements ist der Befestigungsschenkel 24 der Winkelschiene unter Zwischenschaltung des Dichtungsmaterials 28 an der Innenseite der Kanalwand 4 angeordnet, während bei der in Fig. 5 dargestellten Abwandlung der Befestigungsschenkel 24 an der Außenseite der Kanalwand 4 befestigt ist. Eine Verwendung separater Winkelschienen 22 kann insbesondere bei mangelnder apparativer Ausrüstung an Biegemaschinen für Spezialzwecke vorteilhaft sein. Sofern das Außen- oder Innenmedium nicht korrosiv ist, kann eine Verbindung der Winkelschienen 22 außen bzw. innen bei Bedarf auch durch Schweißung erfolgen.

Wie Fig. 6 veranschaulicht ist, erfolgt die mechanische Verbindung, vorzugsweise durch Verschraubung, zwischen dem Befestigungsschenkel 24 der Winkelschiene 22 und der polygonförmigen Kanalwand 4 jeweils im Mittenbereich zwischen benachbarten Polygonecken 20, wobei wiederum zwischen der Kanalwand 4 und der Innenseite des Befestigungsschenkels 24 ein Dichtungsmaterial 28 eingesetzt ist.

**Ansprüche**

1. Leitungselement für einen Rundkanal zur Leitung von gasförmigen Medien,
- mit einer Kanalwand aus in Zylinderform gebogenem Flachmaterial, insbesondere Metallblech, dessen umfangsseitige Ränder an einer achsparallelen Verbindungsnaht miteinander gasdicht verbunden sind, und
- mit je einem endseitigen umlaufenden Stirnflansch zur Herstellung einer Verbindung mit einem anschließenden Leitungselement,
**dadurch gekennzeichnet,**
daß die Verbindungsnaht (l6) durch etwa im rechten Winkel aus der Ebene der Kanalwand (4) abgebogene Randstreifen (6) gebildet ist, die mechanisch, insbesondere durch Verschrauben, miteinander verbunden sind.

2. Leitungselement nach Anspruch 1, dadurch gekennzeichnet, daß die Kanalwand (4) aus mehreren Flachmaterial-Segmenten (2) zusammengesetzt ist, die jeweils zwischen den Stirnflanschen (10) einstückig durchgehend angeordnet sind und durch eine entsprechende Anzahl von achsparallelen Randstreifen (6) miteinander verbunden sind.

3. Leitungselement nach Anspruch 1 oder 2, dadurch gekennzeichnet, daß die Grundfläche des die Kanalwand (4) bildenden Zylinders ein Polygon ist.

4. Leitungselement nach Anspruch 3, dadurch gekennzeichnet, daß der Abstand zwischen benachbarten Polygonecken (20) zwischen 20 mm und 200 mm, vorzugsweise zwischen 50 mm und 150 mm, insbesondere bei 100 mm liegt.

5. Leitungselement nach einem der Ansprüche 1 bis 4, dadurch gekennzeichnet, daß die Stirnflansche (10) durch stirnseitig abgewinkelte Randstreifen (11) des Flachmaterials gebildet sind.

6. Leitungselement nach Anspruch 5, dadurch gekennzeichnet, daß die Stirnflansche (10) zu derselben Seite der Kanalwand (4) abgewinkelt sind wie die achsparallelen Randstreifen (6).

7. Leitungselement nach einem der Ansprüche 1 bis 4, dadurch gekennzeichnet, daß die Stirnflansche (10) durch separate Winkelschienen (22) gebildet sind, die mit dem Flachmaterial der Kanalwand (4) verbunden sind.

8. Leitungselement nach Anspruch 7 dadurch gekennzeichnet, daß der achsparallele Befestigungsschenkel (24) der Winkelschiene (22) auf der Außenseite der Kanalwand angeordnet (4) ist.

9. Leitungselement nach Anspruch 7, dadurch gekennzeichnet, daß der achsparallele Befestigungsschenkel (24) der Winkelschiene (22) auf der Innenseite der Kanalwand (4) angeordnet ist.

10. Leitungselement nach einem der Ansprüche 7 bis 9, dadurch gekennzeichnet, daß die Winkelschienen (22) mit der Kanalwand (4) mechanisch verbunden sind.

11. Leitungselement nach Anspruch 3 oder 4 und 10, dadurch gekennzeichnet, daß die mechanische Verbindung von Winkelschiene (22) und Kanalwand (4) insbesondere durch eine Verschraubung in einen mittleren Bereich zwischen benachbarten Polygonecken (20) erfolgt.

12. Leitungselement nach einem der Ansprüche 1 bis 11, dadurch gekennzeichnet, daß an die Außenkanten der achsparallelen und/oder stirnseitigen Randstreifen (6 bzw, 11) wenigstens annähernd im rechten Winkel abgebogene Stabilisierungsstreifen (8 bzw. 12) anschließen.

FIG.1

FIG.2

EP 0 379 643 A1

FIG.3

FIG.6

FIG.4

FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 160 890 (TOSCHI PRODUKTIONS-GmbH) * Ganzes Dokument * --- | 1-3,5,6 | F 16 L 9/22 |
| A,D | DE-A-3 704 633 (M. SCHMALHOFER) * Zusammenfassung; Figuren * --- | 1-3,5,6 | |
| A | US-A-4 328 981 (GREENE, Jr. et al.) * Zusammenfassung; Figuren * ----- | 1-3 | |
| | | | **RECHERCHIERTE SACHGEBIETE (Int. Cl.5)** |
| | | | F 16 L |

Der vorliegende Recherchenbericht wurde für alle Patentansprüche erstellt

| Recherchenort | Abschlußdatum der Recherche | Prüfer |
|---|---|---|
| DEN HAAG | 30-03-1990 | BARTSCH A.W. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument